(19) Europäisches Patentamt / European Patent Office / Office européen des brevets

(11) **EP 4 595 769 A1**

(12) **EUROPEAN PATENT APPLICATION**

(43) Date of publication:
**06.08.2025 Bulletin 2025/32**

(21) Application number: 24155779.2

(22) Date of filing: **05.02.2024**

(51) International Patent Classification (IPC):
**A23K 30/15** (2016.01)   **A23K 10/30** (2016.01)

(52) Cooperative Patent Classification (CPC):
**A23K 30/15; A23K 10/30; A23K 50/10;**
A23K 10/10; A23K 10/12; A23V 2200/27;
A23V 2250/02; A23V 2250/034; A23V 2250/05;
A23V 2250/054; A23V 2250/202

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Volta Greentech AB**
**171 65 Solna (SE)**

(72) Inventors:
• **Tydinger, Hanna**
  **171 65 Solna (SE)**
• **Demeter, Angelo**
  **171 65 Solna (SE)**

(74) Representative: **Ström & Gulliksson AB**
  **P.O. Box 793**
  **220 07 Lund (SE)**

(54) **ENSILED SEAWEED**

(57) The present disclosure relates to a method of ensiling *Asparagopsis* sp., the method comprising the steps of (a) providing *Asparagopsis sp.* having a moisture content of between 60 and 94 wt%; (b) adding an ensiling agent comprising an organic acid having 1 to 7 carbon atoms or a salt of an organic acid having 1 to 7 carbon atoms; (c) mixing said *Asparagopsis sp.* with the ensiling agent thereby providing a mixture; and (d) storing the mixture from step (c) under dark and anaerobic conditions for a time period sufficient to reduce the pH of the mixture to 4 or less. The present disclosure also relates to Ensiled *Asparagopsis* sp. comprising bromoform in an amount of between 0.3 to 7 wt%, based on dry weight, preferably between 1 to 6 wt%, more preferred 2 to 5 wt%. The present disclosure further relates to an anti-methanogenic feed supplement as well as a method of reducing methanogenesis in a ruminant, and the use of ensiled *Asparagopsis* sp.

EP 4 595 769 A1

**Description**

**Technical Field**

The present disclosure relates to a method of ensiling *Asparagopsis* sp. and to ensiled *Asparagopsis.* Further, the present disclosure relates to an antimethanogenic feed supplement, as well as to a method of reducing methanogenesis in a ruminant and to the use of ensiled *Asparagopsis* for reducing methanogenesis in a ruminant.

**Background Art**

The global herd of ruminants, primarily cattle for beef- and dairy production, emit methane ($CH_4$) as a by-product of enteric fermentation. Enteric fermentation in ruminants is the single largest source of global anthropogenic methane emissions and contributes to approximately 30% of these emissions.

Methanogenic archaea in the rumen produce methane from the ingested feed by reducing $CO_2$ by hydrogen ($H_2$) in an enzymatic reaction. Methanogenesis is an energy-intensive process estimated to result in a loss of 12% of the ingested feed energy.

Biogenic methane is a potent greenhouse gas, exerting a radiative forcing 27-fold greater than $CO_2$ on a 100-year scale. In the first two decades, methane has an even higher global warming potential, 80 times that of $CO_2$. Methane is however a short-lived greenhouse gas with an atmospheric lifetime of about 12 years, as opposed to $CO_2$ that remains in the atmosphere for centuries. Therefore, targeting methane can have a noticeable and impactful effect in the short-term and significantly limit the impact of global warming.

Methane emissions have been increasing rapidly over the last decade due in approximately equal parts to emissions from fossil fuel sources and agricultural sources. Compared to 2015 levels, methane emissions are projected to continue to increase by 30% by year 2050 based on recent trends and current policy scenarios. Furthermore, IPCC projections show that over the upcoming 10 to 20 years, methane and $CO_2$ will have similar impacts in terms of heat absorbed and temperature rise. To meet the 1.5 °C target, ruminal methane emissions must be reduced by 11-30% by 2030 and by 24-47% by 2050. Urgently implemented strategies to mitigate methane can significantly reduce the worst effects of global warming and is absolutely critical in order to limit global warming to 1.5 °C or 2 °C.

In addition to its contribution to global warming, methane has a negative impact on human health and the ecosystem as it is a precursor to tropospheric ozone which is a pollutant having a negative effect on air quality.

The rhodophyta genus *Asparagopsis,* a red seaweed, synthesises and stores secondary metabolites with antimethanogenic effect. These are halogenated methane analogues with bromoform being the most abundant. When *Asparagopsis* is included in ruminant diets, bromoform inhibits the function of key enzymes; coenzyme M methyltransferase and methyl coenzyme M reductase, in the methanogenesis pathway.

Freshly harvested *Asparagopsis* can be fed to ruminants. However, freshly harvested *Asparagopsis* is usable as a feed additive only for a short period of time.

Freeze-dried *Asparagopsis* has demonstrated effect on methane production with a reduction of up to 98% using inclusion levels <1% of feed dry matter. However, the process of freeze-drying *Asparagopsis* releases bromoform.

Thus, there is a need to provide *Asparagopsis* in a form that minimizes the loss of bromoform and that is readily transportable and stable over longer periods of time.

**Summary**

According to a first aspect, the above and other objects of the invention are achieved, in full or at least in part by a composition as defined by claim 1. According to this claim, the above object is achieved by a method of ensiling *Asparagopsis* sp., the method comprising the steps of (a) providing *Asparagopsis sp.* having a moisture content of between 60 and 94 wt%; (b) adding an ensiling agent comprising an organic acid having 1 to 7 carbon atoms or a salt of an organic acid having 1 to 7 carbon atoms; (c) mixing said *Asparagopsis sp.* with the ensiling agent thereby providing a mixture; and (d) storing the mixture from step (c) under dark and anaerobic conditions for a time period sufficient to reduce the pH of the mixture to 4 or less. During these conditions, a substantially anoxic environment will be accomplished.

The ensiling agent may comprise more than one organic acid, such as two, three, four or more organic acids. Thus, the ensiling agent may comprise a mixture of organic acids.

The ensiling agent has an inhibitory effect on spoilage microorganisms such as yeasts and moulds, thus providing for the preservation of the seaweed. The extended shelf-life may be at least three months, such as at least four months, such as at least six months, such as at least nine months, such as at least twelve months.

The pH of the seaweed is lowered by the addition of the ensiling agent, thereby providing for the preservation of the seaweed. During storing, i.e. step (d), the pH is further reduced and the process is regarded as completed when the pH has reached 4 or less.

The ensiling agent rapidly lowers the pH to minimize microbial growth and limit fermentation during ensiling. Especially, yeast and mould growth is prevented. Since fermentation and growth of other microbes are limited, nutrients are preserved.

Thus, the ensiling is accomplished essentially without, or with a limited, fermentation. Importantly, no bacteria, such as lactic acid bacteria is added to the *Asparagopsis* sp..

The acidity improves the palatability of the ensiled *Asparagopsis* sp.. Palatability is the preference an animal has for a particular feed when offered a choice. Palatability is affected by factors such as texture, aroma, sugar content, acidity and smell.

The method according to the present disclosure prevents nutrient loss caused by fermentation or breakdown from microbes. Specifically, enzymatic activity leading to breakdown of protein and/or cell wall constituents is prevented, which maintains cell integrity. A maintained cell integrity preserves bromoform content and thus the antimethanogenic effect of *Asparagopsis.*

The ensiling agent may be diluted with water before it is added to the *Asparagopsis.* The ensiling agent may be diluted in a ratio of 1:1 with water before it is added to the *Asparagopsis.*

In step (b), the ensiling agent may be added by spraying.

The time period of step (d) varies with the amount of ensiling agent added in step (b). In certain cases the time period may be as low as 2 days or 7 days. For the majority of cases, a time period of 2 weeks will be sufficient.

Notably, ensiling *Asparagopsis* sp. preserves the content of nutrients and bioactive compounds to a higher degree than freeze-drying *Asparagopsis* sp., both during processing and storage.

Furthermore, ensiling *Asparagopsis* sp. is more cost- and time-efficient compared to freeze-drying.

Moreover, ensiled *Asparagopsis* sp. can be stored in room temperature, whereas freeze dried *Asparagopsis* sp. must be stored vacuum-sealed and stored refrigerated (8 °C) or frozen (-20 °C) to prevent loss of bromoform.

According to one embodiment, the organic acid is selected from formic acid, acetic acid, propionic acid, butyric acid and lactic acid. Preferably, the organic acid is formic acid and/or propionic acid. More preferably, the ensiling agent comprises formic acid and propionic acid.

According to another embodiment, the ensiling agent comprises formic acid and propionic acid, wherein the weight ratio between formic acid and propionic acid is between 2:1 to 4:1. Preferably, the weight ratio between formic acid and propionic acid is 3:1.

According to a further embodiment, the ensiling agent further comprises potassium sorbate and/or sodium formate.

Such an ensiling agent has a broad inhibitory effect on spoilage caused by microorganisms, such as moulds and yeasts.

Preferably, the ensiling agent comprises potassium sorbate and sodium formate.

According to one embodiment, the ensiling agent comprises formic acid, propionic acid, potassium sorbate and sodium formate. Formic acid as the strongest organic acid enables formation of the undissociated form of propionic acid and together with potassium sorbate, has a strong inhibitory effect on yeast and moulds. Such an ensiling agent restricts the fermentation which results in a reduced amount of both fermentation acids and ethanol.

Preferably, the ensiling agent comprises 58 wt% formic acid, 20 wt% propionic acid, 2.5 wt% potassium sorbate and 5 wt% sodium formate.

According to another embodiment, the amount of ensiling agent added in step (b) is 5 to 20 mL per kg of *Asparagopsis* sp., preferably 10 to 15 mL, most preferred 12 mL per kg of *Asparagopsis* sp..

Especially, the amount of ensiling agent added in step (b) is 5 to 20 mL per kg of *Asparagopsis* sp., preferably 10 to 15 mL, most preferred 12 mL per kg of *Asparagopsis* sp., wherein the ensiling agent comprises formic acid, propionic acid, potassium sorbate and sodium formate, preferably wherein the ensiling agent comprises 58 wt% formic acid, 20 wt% propionic acid, 2.5 wt% potassium sorbate and 5 wt% sodium formate.

According to yet another embodiment, *Asparagopsis* sp. provided in step (a) has a moisture content of 65 to 90 wt%, preferably 70 to 85 wt%, more preferred 75 to 80 wt%. *Asparagopsis* sp. provided in step (a) may have a moisture content of 65 to 75 wt%, such as 70 wt%.

According to one embodiment, *Asparagopsis* sp. is in its tetrasporophyte life stage or in its gametophyte life stage. Preferably, *Asparagopsis* sp. is in its tetrasporophyte life stage. The smaller size and individual structure of the tetrasporophytes (tufts) make it easier to uniformly distribute the ensiling agent.

According to another embodiment, *Asparagopsis* sp. is *Asparagopsis armata* or *Asparagopsis taxiformis.* Preferably, *Asparagopsis* sp. is *Asparagopsis armata. Asparagopsis armata* can tolerate lower cultivation temperatures than *Asparagopsis taxiformis,* which reduces the cost of heating.

After harvest or dewatering, *Asparagopsis* sp. starts to gradually break down due to endogenous enzymatic activity. Thus, ensiling should be started soon after harvest or dewatering. Hence, according to one embodiment, steps (b) and (c) are performed within an hour from harvest or from removal of excess water.

According to a second aspect of the present disclosure, there is provided ensiled *Asparagopsis* sp. comprising bromoform in an amount of between 0.3 to 7 wt%, based on dry weight, preferably between 1 to 6 wt%, more preferred 2 to 5 wt%. Such a product has been demonstrated to inhibit methanogenesis in ruminants.

Typically, the pH of the ensiled *Asparagopsis* sp. is 4 or less.

The ensiled *Asparagopsis* sp. typically has a moisture content of between 60 and 94 wt%, preferably, 65 to 90 wt%, more preferred 70 to 85 wt%, even more preferred 75 to 80 wt%. The ensiled *Asparagopsis* sp. may have a moisture content of 65 to 75 wt%, such as 70 wt%.

According to one embodiment, the ensiled *Asparagopsis* sp. further comprises fat in an amount of 0.3 to 0.7 wt%, and/or carbohydrates in an amount of 8 to 12 wt%, and/or fibres in an amount of 17 to 23 wt%, based on dry weight.

Ensiled *Asparagopsis* sp. has a longer shelf-life than fresh *Asparagopsis* sp..

Compared to freeze-dried *Asparagopsis* sp., ensiled *Asparagopsis* sp. has a better palatability. Furthermore, ensiled *Asparagopsis* sp. has a higher content of nutrients and bioactive compounds than freeze-dried *Asparagopsis* sp., since, during ensiling, these are preserved to a larger extent during processing and storage.

When fed to ruminants, ensiled *Asparagopsis* sp. reduces methane gas production and, consequently, the total gas production, to a larger extent than freeze-dried *Asparagopsis* sp.. This is due to a higher retention of bromoform in ensiled *Asparagopsis* sp. than in freeze-dried *Asparagopsis* sp..

According to a third aspect of the present disclosure, there is provided ensiled *Asparagopsis* sp., wherein the ensiled *Asparagopsis* sp. is produced by the method according to the present disclosure.

According to a fourth aspect of the present disclosure, there is provided an anti-methanogenic feed supplement comprising ensiled *Asparagopsis* sp. according to the present disclosure or produced by the method according to the present disclosure.

The anti-methanogenic feed supplement may further comprise one or more additives. The additive may function e.g. as a flavouring agent, a feed intake enhancer or provide further characteristics to the anti-methanogenic feed supplement.

A flavouring agent increases the palatability of the anti-methanogenic feed supplement. The flavouring agent may be a natural flavouring agent, such as e.g. maltodextrin, molasses, sugar industry waste/by-products, steviol glycosides, sugarcane biomass, sugar beet biomass or industrial alcohol fermentation by-products, or a synthetic flavouring agent, such as e.g. sweeteners or agents containing aromas, such as vanillin and caramel.

Examples of a feed intake enhancer are synthetic aromas that increase palatability of the feed.

Further examples of an additive include yeast extract, digestibility enhancers, probiotics, prebiotics, vitamins and antioxidants.

The anti-methanogenic feed supplement may be administered to a ruminant by mixing it in the ruminant's ordinary feed or by spreading it over the ruminant's ordinary feed.

According to a fifth aspect of the present disclosure, there is provided a method of reducing methanogenesis in a ruminant, the method comprising feeding the ruminant ensiled *Asparagopsis* sp. in an amount corresponding to 0.2 to 0.6 wt%, based on dry matter, of the total feed intake per day, wherein the ensiled *Asparagopsis* sp. is ensiled *Asparagopsis* sp. according to the present disclosure or produced by the method according to the present disclosure. For a beef animal consuming 10 kg dry matter feed per day, this amount corresponds to 20 to 60 g dry matter per day or to 80 to 240 g of ensiled *Asparagopsis* sp. having a moisture content of 75 wt% per day.

The ruminant may be a sheep, a beef animal or a dairy cow. Preferably, the ruminant is a beef animal or a dairy cow.

The ensiled *Asparagopsis* sp. may be mixed into the feed, e.g. by using an animal feed mixing equipment. Alternatively, or additionally, the ensiled *Asparagopsis* sp. is included in the diet by topical administration directly in to the feed.

Compared to feeding the ruminant with fresh *Asparagopsis* sp., ensiled *Asparagopsis* sp. has the advantage of having a longer shelf-life.

Compared to feeding the ruminant with freeze-dried *Asparagopsis* sp., ensiled *Asparagopsis* sp. has the advantage of reducing methane gas production, and consequently, the total gas production, to a larger extent. This is due to a higher retention of bromoform under ambient conditions in ensiled *Asparagopsis* sp. than in freeze-dried *Asparagopsis* sp.. Ensiled *Asparagopsis* sp. can be stored in room temperature, whereas freeze dried *Asparagopsis* sp. must be stored vacuum-sealed and stored refrigerated (8 °C) or frozen (-20 °C) to prevent loss of bromoform.

Furthermore, compared to feeding the ruminant with freeze-dried *Asparagopsis* sp., ensiled *Asparagopsis* sp. has an improved palatability and, in dairy cows, feed intake and milk yield is higher when the cows are fed a feed comprising ensiled Asparagopsis sp. compared to when the cows are fed a feed comprising freeze-dried *Asparagopsis* sp..

According to a sixth aspect of the present disclosure, there is provided a use of ensiled *Asparagopsis* sp. according to the present disclosure or produced by the method according to the present disclosure for reducing methanogenesis in a ruminant.

The ruminant may be a sheep, a beef animal or a dairy cow. Preferably, the ruminant is a beef animal or a dairy cow.

Other objectives, features and advantages of the present disclosure will appear from the following detailed description, from the experimental data, as well as from the attached claims. It is noted that the disclosure relates to all possible combinations of features.

Generally, all terms used in the claims are to be interpreted according to their ordinary meaning in the technical field, unless explicitly defined otherwise herein. All references to "a/an/the [component, means, step, etc.]" are to be interpreted openly as referring to at least one instance of said component, means, step, etc., unless explicitly stated otherwise. The steps of any method disclosed herein do not have to be performed in the exact order disclosed, unless explicitly stated.

As used herein, the term "comprising" and variations of that term are not intended to exclude other additives, components, integers or steps.

As used herein, the term "wt%", or "w/w", denotes "weight/weight %".

As used herein, the term "ambient temperature" refers to a temperature between 5 and 30 °C, such as between 10 and 25 °C, such as between 15 and 20 °C.

## Detailed Description

In the following, details of different aspects of the present disclosure will be described.

### Asparagopsis sp.

The seaweed *Asparagopsis* is a red macroalgae belonging to the family *Bonnemaisoniaceae* and currently (2023) encompasses the three confirmed species *Asparagopsis armata, Asparagopsis taxiformis* and *Asparagopsis svedelli.*

In short, the life cycle of *Asparagopsis* comprises two morphologically different life stages, the gametophyte life stage and the tetrasporophyte life stage. In its haploid gametophyte life stage, occurring from June to September in Western Europe, *Asparagospis* has a plant-like structure up to 20 cm in length with barbed branches and a rosy/yellowish-pink colour. The reproductive structures gametophytes are either male or female and via fecundation a diploid carposporophyte is produced. The carposporophyte divides into tetrasporophytes. In its diploid tetrasporophyte life stage, occurring between October and March in Western Europe, *Asparagopsis* consists of branched, filamentous, cotton-wool-like tufts up to 15 mm in diameter, which are brownish red in colour. The tetrasporophyte goes through meiosis and releases tetraspores that will grow by mitosis into either male or female gametophytes, thereby completing the life cycle.

Both the gametophyte form and the tetrasporophyte form may be ensiled by the method disclosed herein.

Typically, the moisture content of freshly harvested *Asparagopsis* that has not been dewatered is up to 94 wt%. By dewatering, the moisture content can be reduced to about 60 wt%.

*Asparagopsis* synthesizes and stores secondary metabolites with anti-methanogenic effect. These are halogenated methane analogues with bromoform being the most abundant. Bromoform inhibits the function of key enzymes such as coenzyme M methyltransferase and methyl-coenzyme M reductase, in the methanogenesis pathway. Thus, when *Asparagopsis* is included in ruminant diets, the amount of produced methane will be reduced.

### *Ensiling*

Traditionally, ensiling, also referred to as ensilage or silaging, refers to a process during which anaerobic bacteria, typically lactic acid bacteria, are used to ferment plant material. During the process, plant sugars are fermented to organic acids, which lowers the pH of the plant material thereby reducing the growth of other, unwanted, bacteria as well as of yeasts and moulds. To promote the growth of ensiling bacteria and reduce the growth of unwanted microorganisms, an ensiling agent that lowers the pH may be added in the beginning of the process. In some cases, ensiling bacteria, typically one or more strains of lactic acid bacteria, may also be added. The fermentation proceeds until the silage has a pH of 4 or below, or until the sugars are depleted. If kept under anaerobic conditions, the resulting silage has a long shelf life, typically several months or even years.

Ensiling may also refer to a method of lowering the pH value of biological material in order to preserve the material. Thus, ensiling may be a process wherein the pH value is lowered by the addition of one or more acids, without or with very little fermentation. This is the type of ensiling referred to in the present disclosure.

### *Method of ensiling* Asparagopsis sp.

The present disclosure relates to a method of ensiling *Asparagopsis* sp..

In short, the method comprises ensiling *Asparagopsis* sp. biomass with an organic acid. The organic acid lowers the pH and prevents mould, bacterial and yeast growth and prevents post-warming.

This way of processing algae is cost-efficient and allows for a large production capacity in comparison to freeze-drying. Moreover, ensiled seaweed is expected to be shelf-stable in ambient temperature with little to no loss of bioactive compounds during processing and storage.

The method comprising the steps of:

(a) providing *Asparagopsis sp.* having a moisture content of between 60 and 94 wt%;
(b) adding an ensiling agent comprising an organic acid having 1 to 7 carbon atoms or a salt of an organic acid having 1 to 7 carbon atoms;
(c) mixing said *Asparagopsis sp.* with the ensiling agent thereby providing a mixture; and
(d) storing the mixture from step (c) under dark and anaerobic conditions for a time period sufficient to reduce the pH of the mixture to 4 or less.

Preferably, the *Asparagopsis* sp. provided in step (a) is freshly harvested. Typically, the moisture content of freshly harvested *Asparagopsis* that has not been dewatered (i.e. removal of excess water) is up to 94 wt%. By dewatering, the moisture content can be reduced to about 60 wt%. Dewatering may be accomplished by e.g. centrifugation, gravity sedimentation, flocculation, filtration, flotation, or electrophoresis techniques. A combination of these techniques may also be used. More preferably, the *Asparagopsis* sp. provided in step (a) has been dewatered. Thus, preferably, the *Asparagopsis* sp. provided in step (a) has a moisture content of 65 to 90 wt%, preferably 70 to 85 wt%, more preferred 75 to 80 wt%. The *Asparagopsis* sp. provided in step (a) may have a moisture content of 65 to 75 wt%, such as 70 wt%. One advantage of dewatering the *Asparagopsis* sp. is that, due to the higher content of dry matter, less acid is required when ensiling dewatered *Asparagopsis* sp. than when ensiling fresh *Asparagopsis* sp.. Furthermore, the reduced volume and weight leads to a reduced required storage space and shipping costs. Moreover, the content of dry matter in the final product is increased.

Preferably, *Asparagopsis* sp. is in its tetrasporophyte life stage or in its gametophyte life stage. More preferably, *Asparagopsis* sp. is in its tetrasporophyte life stage. The smaller size and individual structure of the tetrasporophytes (tufts) make it easier to uniformly distribute the ensiling agent.

In one embodiment, *Asparagopsis* sp. is in its tetrasporophyte life stage and has a moisture content of 65 to 75 wt%, such as 70 wt%.

In a specific embodiment, *Asparagopsis* sp. is in its tetrasporophyte life stage and has a moisture content of 75 to 80 wt%.

*Asparagopsis* sp. may be *Asparagopsis armata* or *Asparagopsis taxiformis.* Preferably, *Asparagopsis* sp. is *Asparagopsis armata*. *Asparagopsis armata* can tolerate lower cultivation temperatures than *Asparagopsis taxiformis,* which reduces the cost of heating. More preferably, *Asparagopsis armata* is in its tetrasporophyte life stage. The smaller size and individual structure of the tetrasporophytes (tufts) make it easier to uniformly distribute the ensiling agent.

In a specific embodiment, *Asparagopsis* sp. is *Asparagopsis armata* in its tetrasporophyte life stage and has a moisture content of 65 to 75 wt%, such as 70 wt%.

In a specific embodiment, *Asparagopsis* sp. is *Asparagopsis armata* in its tetrasporophyte life stage and has a moisture content of 75 to 80 wt%.

After harvest or dewatering, *Asparagopsis* sp. starts to gradually break down due to endogenous enzymatic activity. Thus, ensiling should be started soon after harvest or dewatering. In order to prevent breakdown of the seaweed due to endogenous enzymatic activity, steps (b) and (c) are preferably performed within an hour from harvest or from removal of excess water.

Through the addition of an ensiling agent in step (b), the pH of the seaweed is lowered, thereby providing for the preservation of the seaweed. During storing, i.e. step (d), the pH is further reduced and the process is regarded as completed when the pH has reached 4 or less.

The ensiling agent rapidly lowers the pH to minimize microbial growth and limit fermentation during ensiling. Especially, yeast and mould growth is prevented. Importantly, the fermentation of the seaweed by bacteria is minimized. Since fermentation and growth of other microbes are limited, nutrients are preserved.

Thus, the ensiling is accomplished essentially without, or with a limited, fermentation. Importantly, no bacteria, such as lactic acid bacteria, is added to the *Asparagopsis* sp.. The process resembles the process of pickling.

In step (b), the organic acid may be selected from formic acid, acetic acid, propionic acid, butyric acid and lactic acid, preferably wherein the organic acid is formic acid and/or propionic acid. Other examples of acids that can be used in step (b) include benzoic acid, citric acid and sorbic acid.

The ensiling agent may be diluted with water before it is added to the *Asparagopsis.* The ensiling agent may be diluted in a ratio of 1:1 with water before it is added to the *Asparagopsis.*

In step (b), the ensiling agent may be added by spraying. Alternatively, the ensiling agent is added by pouring the ensiling agent on the seaweed, followed by thorough mixing during step (c).

The step (c) of mixing may be accomplished by mechanical or manual mixing. Alternatively, step (c) of mixing in performed simultaneously with step (b), e.g. by laying a thin layer, such as 2 to 10 cm, of seaweed, adding ensiling agent evenly, such as by pouring or spraying, followed by a one or more further similar layers of seaweed and ensiling agent.

Preferably, the ensiling agent comprises formic acid and propionic acid. Specifically, the weight ratio between formic acid and propionic acid is preferably between 2:1 to 4:1, more preferably 3:1.

The ensiling agent may further comprise potassium sorbate and/or sodium formate.

In a specific embodiment, the ensiling agent comprises formic acid, propionic acid, potassium sorbate and sodium formate. Preferably, the ensiling agent comprises 58 wt% formic acid, 20 wt% propionic acid, 2.5 wt% potassium sorbate and 5 wt% sodium formate.

The amount of ensiling agent added in step (b) may be 5 to 20 mL per kg of *Asparagopsis* sp., preferably 10 to 15 mL, most preferred 12 mL per kg of *Asparagopsis* sp..

In a specific embodiment, *Asparagopsis* sp. is in its tetrasporophyte life stage and the ensiling agent comprises formic acid and propionic acid, wherein the weight ratio between formic acid and propionic acid is between 2:1 to 4:1, more preferably 3:1. Preferably, *Asparagopsis* sp. has a moisture content of 75 to 80 wt%. The ensiling agent may further comprise potassium sorbate and/or sodium formate. The amount of ensiling agent added in step (b) may be 5 to 20 mL per kg of *Asparagopsis* sp., preferably 10 to 15 mL, most preferred 12 mL per kg of *Asparagopsis* sp..

In another specific embodiment, *Asparagopsis* sp. is *Asparagopsis armata* and the ensiling agent comprises formic acid and propionic acid, wherein the weight ratio between formic acid and propionic acid is between 2:1 to 4:1, preferably 3:1. Preferably, *Asparagopsis armata* in its tetrasporophyte life stage. Preferably, *Asparagopsis armata* has a moisture content of 75 to 80 wt%. The ensiling agent may further comprise potassium sorbate and/or sodium formate. The amount of ensiling agent added in step (b) may be 5 to 20 mL per kg of *Asparagopsis armada,* preferably 10 to 15 mL, most preferred 12 mL per kg of *Asparagopsis armata.*

In a specific embodiment, *Asparagopsis* sp. is *Asparagopsis armata* and the ensiling agent comprises formic acid, propionic acid, potassium sorbate and sodium formate. Preferably, *Asparagopsis armata* in its tetrasporophyte life stage. Preferably, *Asparagopsis armata* has a moisture content of 75 to 80 wt%. Preferably, the ensiling agent comprises 58 wt% formic acid, 20 wt% propionic acid, 2.5 wt% potassium sorbate and 5 wt% sodium formate. The amount of ensiling agent added in step (b) may be 5 to 20 mL per kg of *Asparagopsis armada,* preferably 10 to 15 mL, most preferred 12 mL per kg of *Asparagopsis armata.*

During step (d), the pH is reduced and the process is regarded as completed when the pH has reached 4 or less. The time period of step (d) varies with the amount of ensiling agent added in step (b). In certain cases the time period may be as low as 2 days or 7 days. For the majority of cases, a time period of 2 weeks will be sufficient.

Anaerobic conditions may be accomplished by storing the mixture from step (c) in e.g. plastic that has been vacuum-sealed.

The mixture may be stored at ambient temperature.

The acidity of the silage improves the palatability of the silage. Palatability is the preference an animal has for a particular feed when offered a choice. Palatability is affected by factors such as texture, aroma, sugar content, and smell.

The method according to the present disclosure prevents nutrient loss caused by fermentation or breakdown from microbes. Specifically, breakdown of protein and/or cell wall constituents is prevented, which maintains cell integrity. *Asparagopsis* maintained cell integrity preserves bromoform content and thus the antimethanogenic effect of *Asparagopsis.*

The resulting product typically comprises bromoform in an amount of between 0.3 to 7 wt%, based on dry weight, preferably between 1 to 6 wt%, more preferred 2 to 5 wt%.

The resulting product typically has a moisture content of 65 to 90 wt%, preferably 70 to 85 wt%, more preferred 75 to 80 wt%.

Notably, ensiling *Asparagopsis* sp. preserves the content of nutrients and bioactive compounds to a higher degree than freeze-drying *Asparagopsis* sp., both during processing and storage.

Furthermore, ensiling *Asparagopsis* sp. is more cost- and time-efficient compared to freeze-drying.

### *Ensiled* Asparagopsis sp.

The present disclosure also relates to ensiled *Asparagopsis* sp.. Typically, the ensiled *Asparagopsis* sp. may be produced by the method according to the present disclosure.

Ensiled *Asparagopsis* sp. has a longer shelf-life than fresh *Asparagopsis* sp..

Compared to freeze-dried *Asparagopsis* sp., ensiled *Asparagopsis* sp. has a higher content of nutrients and bioactive compounds than freeze-dried *Asparagopsis* sp., since, during ensiling, these are preserved to a larger extent during processing and storage. Moreover, ensiled *Asparagopsis* sp. can be stored in room temperature, whereas freeze dried *Asparagopsis* sp. must be stored vacuum-sealed and stored refrigerated (8 °C) or frozen (-20 °C) to prevent loss of bromoform.

Ensiled *Asparagopsis* has been demonstrated to increase the palatability of the feed. When fed to ruminants, the ensiled *Asparagopsis* sp. reduces the methane gas production and, consequently, the total amount of produced gases to a larger extent than freeze-dried *Asparagopsis* sp.. This is due to a higher retention of bromoform in ensiled *Asparagopsis* sp. than in freeze-dried *Asparagopsis* sp..

Specifically, the amount of produced methane is heavily reduced and may even be prevented. In addition, when fed to dairy cows, the total feed intake as well as the milk yield is increased.

Ensiled *Asparagopsis* sp. typically comprises bromoform in an amount of between 0.3 to 7 wt%, based on dry weight, preferably between 1 to 6 wt%, more preferred 2 to 5 wt%.

Typically, the pH of the ensiled *Asparagopsis* sp. is 4 or less.

Typically, the ensiled *Asparagopsis* sp. has a moisture content of 65 to 90 wt%, preferably 70 to 85 wt%, more preferred 75 to 80 wt%.

Preferably, the ensiled *Asparagopsis* sp. is ensiled *Asparagopsis armata* in its tetrasporophyte life stage.

In some cases, the ensiled *Asparagopsis* sp. further comprises fat in an amount of 0.3 to 0.7 wt%, and/or carbohydrates in an amount of 8 to 12 wt%, and/or fibres in an amount of 17 to 23 wt%, based on dry weight.

In some cases, the ensiled *Asparagopsis* sp. has a pH of 4 or less and further comprises fat in an amount of 0.3 to 0.7 wt%, and/or carbohydrates in an amount of 8 to 12 wt%, and/or fibres in an amount of 17 to 23 wt%, based on dry weight.

In some cases, the ensiled *Asparagopsis* sp. has a moisture content of 65 to 90 wt%, preferably 70 to 85 wt%, more preferred 75 to 80 wt% and further comprises fat in an amount of 0.3 to 0.7 wt%, and/or carbohydrates in an amount of 8 to 12 wt%, and/or fibres in an amount of 17 to 23 wt%, based on dry weight.

In a specific embodiment, the ensiled *Asparagopsis* sp. has a pH of 4 or less, has a moisture content of 65 to 90 wt%, preferably 70 to 85 wt%, more preferred 75 to 80 wt% and further comprises fat in an amount of 0.3 to 0.7 wt%, and/or carbohydrates in an amount of 8 to 12 wt%, and/or fibres in an amount of 17 to 23 wt%, based on dry weight.

In another specific embodiment, the ensiled *Asparagopsis* sp. is ensiled *Asparagopsis armada,* has a pH of 4 or less, has a moisture content of 65 to 90 wt%, preferably 70 to 85 wt%, more preferred 75 to 80 wt% and further comprises fat in an amount of 0.3 to 0.7 wt%, and/or carbohydrates in an amount of 8 to 12 wt%, and/or fibres in an amount of 17 to 23 wt%, based on dry weight. Preferably, *Asparagopsis armata* is in its tetrasporophyte life stage.

Ensiled *Asparagopsis* sp. may be administered to a ruminant by mixing it in the ruminant's ordinary feed or by spreading it over the ruminant's ordinary feed.

In some cases, ensiled *Asparagopsis* sp. may be mixed with one or more flavouring agents, further increasing the palatability.

### Anti-methanogenic feed supplement

The present disclosure also relates to an anti-methanogenic feed supplement. The anti-methanogenic feed supplement comprises ensiled *Asparagopsis* sp.. Typically, the ensiled *Asparagopsis* sp. is ensiled *Asparagopsis* sp. according to the present disclosure or produced by the method according to the present disclosure.

The feed supplement has a long shelf-life, typically at least three months, such as at least four months, such as at least six months, such as at least nine months, such as at least twelve months.

Typically, the anti-methanogenic feed supplement has a moisture content of 65 to 90 wt%, preferably 70 to 85 wt%, more preferred 75 to 80 wt%.

In some cases, the anti-methanogenic feed supplement further comprises one or more additives. The additive may function e.g. as a flavouring agent, a feed intake enhancer or provide further characteristics to the anti-methanogenic feed supplement.

A flavouring agent increases the palatability of the anti-methanogenic feed supplement. The flavouring agent may be a natural flavouring agent, such as e.g. maltodextrin, molasses, sugar industry waste/by-products, steviol glycosides, sugarcane biomass, sugar beet biomass or industrial alcohol fermentation by-products, or a synthetic flavouring agent, such as e.g. sweeteners or agents containing aromas, such as vanillin and caramel.

Examples of a feed intake enhancer are synthetic aromas that increase palatability of the feed.

Further examples of an additive include yeast extract, digestibility enhancers, probiotics, prebiotics, vitamins and antioxidants.

The anti-methanogenic feed supplement may comprise ensiled *Asparagopsis* sp. and a flavouring agent. The flavouring agent may be molasses.

The anti-methanogenic feed supplement may comprise ensiled *Asparagopsis* sp. and a feed intake enhancer.

The anti-methanogenic feed supplement may comprise ensiled *Asparagopsis* sp. and a feed an additive.

The anti-methanogenic feed supplement may comprise ensiled *Asparagopsis* sp., a flavouring agent and a feed intake enhancer. The flavouring agent may be molasses.

The anti-methanogenic feed supplement may comprise ensiled *Asparagopsis* sp., a flavouring agent and a feed an additive. The flavouring agent may be molasses.

The anti-methanogenic feed supplement may comprise ensiled *Asparagopsis* sp., a feed intake enhancer and a feed an additive.

The anti-methanogenic feed supplement may comprise ensiled *Asparagopsis* sp., a flavouring agent, a feed intake enhancer and a feed an additive. The flavouring agent may be molasses.

The anti-methanogenic feed supplement may be administered to a ruminant by mixing it in the ruminant's ordinary feed or by spreading it over the ruminant's ordinary feed.

The ruminant may be a sheep, a beef animal or a dairy cow. Preferably, the ruminant is a beef animal or a dairy cow.

### *Method of reducing methanogenesis in a ruminant*

The present disclosure also relates to a method of reducing methanogenesis in a ruminant.

The ruminant may be a sheep, a beef animal or a dairy cow. Preferably, the ruminant is a beef animal or a dairy cow.

The method comprises feeding the ruminant ensiled *Asparagopsis* sp. in an amount corresponding to 0.2 to 0.6 wt%, based on dry matter, of the total feed intake per day, wherein the ensiled *Asparagopsis* sp. is ensiled *Asparagopsis* sp. according to the present disclosure or produced by the method according to the present disclosure.

For a beef animal consuming 10 kg dry matter feed per day, this amount corresponds to 20 to 60 g dry matter per day or to 80 to 240 g of ensiled *Asparagopsis* sp. having a moisture content of 75 wt% per day.

The ruminant may be a sheep, a beef animal or a dairy cow. Preferably, the ruminant is a beef animal or a dairy cow.

The ensiled *Asparagopsis* sp. may be mixed into the feed, e.g. by using an animal feed mixing equipment. Alternatively, or additionally, the ensiled *Asparagopsis* sp. is included in the diet by topical administration directly in to the feed.

### *Use* of *ensiled* Asparagopsis sp.

The present disclosure also relates to a use of ensiled *Asparagopsis* sp. for reducing methanogenesis in a ruminant, the ensiled *Asparagopsis* sp. being ensiled *Asparagopsis* sp. according to the present disclosure or produced by the method according to the present disclosure.

### Experiments

In the following, experiments illustrating different details of the present disclosure are described.

### *Preparation* of *Asparagopsis*

#### *Preparation of ensiled* Asparagopsis

*Asparagopsis armata* was ensiled by the method according to the present disclosure. The stock solution of the ensiling agent contained 58 wt% formic acid, 20 wt% propionic acid, 2.5 wt% potassium sorbate and 5 wt% sodium formate. The ensiling agent was added at an amount of 5, 12 and 20 mL stock solution per kg of *Asparagopsis armata* (being in its tetrasporophyte lifestage and having a moisture content of 74 wt%). In some cases, for practical reasons, the stock solution of the ensiling agent was diluted 1:1 in water before it was added to *Asparagopsis armata*. After preparation, the seaweed was stored under dark, vacuum-sealed (i.e. anaerobic), ambient conditions.

#### *Preparation of freeze-dried* Asparagopsis

Freeze-dried *Asparagopsis armata* was prepared as follows. After harvesting and an initial removal of excess water by centrifugation, the seaweed was placed uniformly on trays and stored in -20 °C for at least 2 hours, after which the trays were transferred to a freeze-dryer and dried (<600 mTorr (approximately 400 Pa), temperature stepwise increased from -30 °C to 10 °C) until it contained 88 to 98 wt% dry matter (DM). The dried seaweed was milled to give a uniform powder, which was vacuum-sealed and stored refrigerated (8 °C) or frozen (-20 °C).

### *Measurements of pH of ensiled* Asparagopsis

To evaluate the effect of different amounts of ensiling agent used, the pH of ensiled *Asparagopsis armata* prepared as described above was evaluated for three different amounts of added ensiling agent over a time period of up to 12 days. At each point of analysis, 25 g of seaweed was manually mixed with 50 mL distilled water using a mortar. After 15 min of standing time, pH in the liquid was analyzed using a pH probe. Each sample was analyzed with two replicates and the mean was computed. The results are shown in Table 1.

*Table 1. Measurements of pH of ensiled* Asparagopsis *using different amounts of ensiling agent.*

| Amount of ensiling agent (mL/kg Asparagopsis) | pH (average of two replicates) after different time periods | | | |
|---|---|---|---|---|
| | 24 h | 48 h | 7 days | 12 days |
| 5 | 4.63 | 4.5 | 4.37 | 4.32 |
| 12 | 4.13 | 4.00 | 3.97 | 3.97 |
| 20 | 3.79 | 3.75 | 3.71 | 3.72 |

As can be seen in Table 1, when 20 mL per kg of *Asparagopsis* sp. is used, the pH of the seaweed is reaches well below 4 already after 24 h. The pH is further lowered during the following days and is then stable.

A time period of 48 h is needed to reach a pH of 4 or less when 12 mL per kg of *Asparagopsis* sp. is used. The pH is further lowered to 3.97 (at day 7) whereafter it is stable until the last time point of 12 days.

Further, even at an amount of 5 mL ensiling agent per kg *Asparagopsis,* the pH of the mixture is gradually lowered. However, the time needed to reach a pH of 4 or less is prolonged compared to when larger amounts of the ensiling agent are used. Thus, the amount of ensiling agent added in step (b) of the method according to the present disclosure is preferably 10 to 15 mL per kg of *Asparagopsis* sp., most preferred 12 mL per kg of *Asparagopsis* sp.. When the preferred amount (10 to 15 mL per kg of *Asparagopsis* sp., the time period sufficient to reduce the pH of the mixture to 4 or less (step (d)) is 48 hours.

### *In vitro evaluation of methane production*

Freeze-dried *Asparagopsis armata* and ensiled *Asparagopsis armata* were prepared from the same batch of fresh biomass. Freeze-dried *Asparagopsis armata* was prepared as described above. *Asparagopsis armata* was ensiled as described above, where the stock solution of the ensiling agent was added at an amount of 12 mL per kg of *Asparagopsis armata.* After preparation, the seaweed was stored as described above for a time period of at least 48 hours. The experiment described below was conducted three months after preparation of the product that was stored at ambient temperature, demonstrating that the product is stable for at least three months.

Methane ($CH_4$) production was evaluated *in vitro* by the method described in Stefański et al. (2018). In short, each sample (described below) was mixed with buffer (bicarbonate/phosphate) and fresh rumen fluid from dairy cows in a 250 mL flask (in a ratio of buffer: rumen fluid of at least 1:2) and incubated at 39 °C. The gases produced during the incubation were collected in gas sampling bags. After 6 and 24 h of incubation, the gas volume was recorded, and representative samples were collected with a syringe and the methane production was analysed by gas chromatography.

Each sample contained a mixture of grass silage and concentrate feed (i.e. a feed that is rich in energy and/or protein content, but low in fibre content) in a weight ratio of 60:40 (hereafter referred to as "basal diet"). Freeze-dried and ensiled *Asparagopsis* were added in an amount of 0.4 wt% of the "basal diet" (based on dry matter, DM). Three different samples were tested: (A) Negative control: "basal diet" only; (B) FD *Asparagopsis:* "basal diet" + freeze-dried *Asparagopsis;* and (C) Ensiled *Asparagopsis:* "basal diet" + ensiled *Asparagopsis.* A "blank test" containing buffer and fresh rumen fluid only was conducted to measure the base-line production of gas by the buffer and fresh rumen alone. This base-line production was deducted from the results obtained from the samples A to C. The results are presented in Table 2.

*Table 2.* In vitro *evaluation of methane production*

| Sample [a] (basal diet + additive) | $CH_4$-production | | | | Total gas production | | | |
|---|---|---|---|---|---|---|---|---|
| | (mg/g diet) | | Compared to control (%) | | (mg/g diet) | | Reduction compared to control (%) | |
| | 6 h | 24 h | 6 h | 24 h | 6 h | 24 h | 6 h | 24 h |
| Negative control | 7.78 | 16.04 | - | - | 113.2 | 233.7 | - | - |
| FD *Asparagopsis* | 0.00 | 0.00 | 100 | 100 | 114.8 | 225.3 | -1.46 | 3.61 |
| Ensiled *Asparagopsis* | 0.00 | 0.00 | 100 | 100 | 105.2 | 223.3 | 7.02 | 4.46 |
| [a] *Negative control: "basal diet" only; FD Asparagopsis: "basal diet" + freeze-dried* Asparagopsis; *Ensiled* Asparagopsis: *"basal diet" + ensiled* Asparagopsis | | | | | | | | |

The analysis demonstrates that ensiled *Asparagopsis* reduces methane production as efficiently, i.e. 100% reduction in methane production after 6 h and 24 h, as the freeze-dried *Asparagopsis* (standard) at the same inclusion rate of 0.4 wt% DM basis. Furthermore, an addition of ensiled *Asparagopsis* reduces the total gas production to a larger extent than an addition of freeze-dried *Asparagopsis*.

### *Evaluation of palatability* in vivo

Palatability is the preference an animal has for a particular feed when offered a choice. Palatability is affected by factors such as texture, aroma, sugar content, and smell. Ensiled *Asparagopsis armata* was evaluated against freeze-dried *Asparagopsis armata* (control) in dairy cows (5 animals per treatment) to determine effect on feed intake and milk yield (kg ECM). Freeze-dried *Asparagopsis armata* was prepared as described above. *Asparagopsis armata* was ensiled as described above, where the stock solution of the ensiling agent was added at an amount of 12 mL per kg of *Asparagopsis armata*. After preparation, the seaweed was stored as described above for a time period of at least 48 hours. Each sample contained mixture of grass silage and concentrate feed (i.e. a feed that is rich in energy and/or protein content, but low in fibre content) in a weight ratio of 60:40 (hereafter referred to as "basal diet"). Freeze-dried and ensiled *Asparagopsis* were added in an amount of 0.2 wt% of the "basal diet" (based on dry matter, DM). Feed intake was measured as kg dried matter per day (kg DM/d). Milk yield was evaluated as energy corrected milk (ECM). ECM determines the amount of milk produced adjusted to a specified amount of butter fat and protein. In this evaluation, ECM was calculated using the following formula:

$$ECM = \frac{383 \times fat\% + 242 \times protien\% + 165.4 \times lactose\% + 20.7}{3140} \times kg\ milk$$

*where fat%, protein % a d lactose% are wt%.*
The results are shown in Table 3.

*Table 3.* In vivo *comparison of feed comprising different preparations of* Asparagopsis

| Preparation | Feed Intake (kg DM/d) | ECM yield (kg/d) |
|---|---|---|
| Freeze-dried *Asparagopsis* | 20.5 | 31.2 |
| Ensiled *Asparagopsis* | 26.3 | 38.6 |
| Ensiled *Asparagopsis* + Flavour* | 25.9 | 35.1 |
| *\* Flavouring agent with a butter vanilla aroma (6 g/kg* Asparagopsis *(wet weight))* | | |

As can be seen in Table 3, feed intake and milk yield was higher when the cows were fed a feed comprising ensiled *Asparagopsis* compared to when the cows were fed a feed comprising freeze-dried *Asparagopsis*. Thus, ensiled *Asparagopsis* increases the palatability of the feed.

### *Composition Analysis*

The composition of freeze-dried *Asparagopsis armata* and ensiled *Asparagopsis armata* were analysed. Freeze-dried *Asparagopsis armata* and ensiled *Asparagopsis armata* were prepared from the same batch of fresh biomass. Freeze-dried *Asparagopsis armata* was prepared as described above. *Asparagopsis armata* was ensiled as described above, where the stock solution of the ensiling agent was added at an amount of 12 mL per kg of *Asparagopsis armata*. After preparation, the seaweed was stored as described above for a time period of at least 48 hours.
The compositions were analysed according to the following. Fibre content was analysed according to a method based on AOAC Method 985.29. The method was performed enzymatically with analytical kit Megazym. Dry matter (DM) was analysed according to a method based on Journal of AOAC International vol. 88, No.1, 2005 and Journal of AOAC International vol. 86, No. 6, 2003, and measurements were performed using gravimetric analysis. Fat content was analysed according to a method based on Journal of AOAC International vol. 88, No.1, 2005 and Journal of AOAC International vol. 86, no.6, 2003, and measurements were performed using NMR (nuclear magnetic resonance). Fatty acids were analysed according to CSN EN ISO 12966-1 and CSN EN ISO 12966-2, and measurements were performed using GC-FID (gas chromatography-flame ionization detection). Salt content was analysed according to a method based on US EPA 200.7 and CSN EN ISO 11885, and measurement were performed with ICP-AES (inductively coupled plasma atomic emission spectroscopy). Protein content was analysed according to EN ISO 14891, EN ISO 16634-1 and ISO 16634-2, and measurements were performed using Dumas (a recognized method for analysing total nitrogen in organic matrices). Carbohydrate and sugar contents were analysed according to CSN EN 12630, and measurements performed using ion chromatography with electrochemical detection. The results are presented in Table 4.

As shown in Table 4, the nutritional contents of freeze-fried *Asparagopsis* and ensiled *Asparagopsis* are comparable, except for the content of fat, carbohydrates and fibres.

The fat content (based on dry weight) is five times higher in ensiled *Asparagopsis* (0.5 g/100 g dry weight) compared to freeze-dried *Asparagopsis* (<0.1 g/100 g dry weight).

The carbohydrate content (based on dry weight) in ensiled *Asparagopsis* is approximately 40 % (10.8 g/100 g dry weight) of the carbohydrate content in freeze-dried *Asparagopsis* (27.1 g/100 g dry weight), demonstrating that carbohydrates have been fermented.

Notably, the sugar content is approximately the same in ensiled *Asparagopsis* as in freeze-dried *Asparagopsis,* showing that fermentation of sugar is limited.

The fibre content (based on dry weight) is approximately 3.5 times higher in ensiled *Asparagopsis* (19.7 g/100 g dry weight) compared to freeze-dried *Asparagopsis* (5.6 g/100 g dry weight).

*Table 4. Composition of different preparations* of Asparagopsis

| Analysis (per 100 g) | Freeze-dried *Asparagopsis* | | Ensiled *Asparagopsis* | |
| --- | --- | --- | --- | --- |
| | original composition | based on dry matter | original composition | based on dry matter |
| Energy (kcal) | 310 | 329.8 | 76 | 294.6 |
| Energy (kJ) | 1,300 | 1,383 | 319 | 1,236 |
| Fat (g) | <0.10 | <0.1 | 0.14 | 0.5 |
| Saturated fat (g) | <0.10 | <0.10 | <0.10 | <0.10 |
| Monounsaturated fat (g) | <0.10 | <0.10 | <0.10 | <0.10 |
| Polyunsaturated fat (g) | <0.10 | <0.10 | <0.10 | <0.10 |
| Carbohydrates (g) | 25.5 | 27.1 | 2.78 | 10.8 |
| Sugar (g) | <0.30 | <0.30 | <0.30 | <0.30 |
| Fibre (g) | 5.31 | 5.6 | 5.07 | 19.7 |
| Protein (g) | 48.2 | 51.3 | 13.3 | 51.6 |
| Salt (g) | 5.78 | 6.1 | 1.74 | 6.7 |
| Water (g) | 6 | - | 74.2 | - |

**In vitro *comparison to* Asparagopsis *ensiled with bacteria***

*Asparagopsis armata* was ensiled using bacteria. In short, a commercially available lactic acid bacteria fermentation mixture was suspended in 1 L of water and 10 mL of the mixture was added per kg of seaweed. The treated seaweed was stored for three months before analysis.

The methane production was evaluated *in vitro* as described above.

*Table 5.* In vitro *evaluation of methane production*

| Sample [a] (basal diet + additive) | $CH_4$-production | | | | Total gas production | | | |
| --- | --- | --- | --- | --- | --- | --- | --- | --- |
| | (mg/g diet) | | Compared to control (%) | | (mg/g diet) | | Reduction compared to control (%) | |
| | 6 h | 24 h | 6 h | 24 h | 6 h | 24 h | 6 h | 24 h |
| Negative control | 7.78 | 16.04 | - | - | 113.1 | 233.7 | - | - |
| Ensiled *Asparagopsis* (with bacteria) | 5.58 | 12.7 | 28.3 | 20.8 | 105.2 | 234.5 | 7.02 | -0.35 |

(continued)

| Sample [a] (basal diet + additive) | CH$_4$-production | | | | Total gas production | | | |
|---|---|---|---|---|---|---|---|---|
| | (mg/g diet) | | Compared to control (%) | | (mg/g diet) | | Reduction compared to control (%) | |
| | 6 h | 24 h | 6 h | 24 h | 6 h | 24 h | 6 h | 24 h |
| Ensiled *Asparagopsis* (according to the present disclosure) | 0.00 | 0.00 | 100 | 100 | 105.2 | 223.2 | 7.02 | 4.46 |

As shown in Table 5, *Asparagopsis* ensiled using bacteria was not as efficient in reducing the production of methane as *Asparagopsis* ensiled according to the present disclosure. Notably, the effect on methane production was notably lower than for seaweed ensiled according to the present disclosure.

During fermentation, the bacteria break down protein and/or cell wall constituents of the seaweed, leading to the release of cellular content, including bromoform, to the environment. Thus, the resulting *Asparagopsis* ensiled with bacteria will contain less bromoform than *Asparagopsis* ensiled according to the present disclosure. Further, the released bromoform may lead to a reduced growth of the ensiling bacteria and thus to a reduced production of acids that lower the pH of the mixture. Thus, the growth of unwanted microbes is not prevented or limited as efficiently.

On the contrary, the method according to the present disclosure prevents nutrient loss caused by fermentation or breakdown from fermenting bacteria and other microbes. Specifically, breakdown of protein and/or cell wall constituents is prevented, which maintains cell integrity. A maintained cell integrity preserves bromoform content and thus the anti-methanogenic effect of *Asparagopsis.*

## *References*

- Journal of AOAC International vol. 88, No.1, 2005
- Journal of AOAC International vol. 86, No. 6, 2003
- Stefański, T., et al.; 2018; In vitro ruminal digestion and methane production from different products of microcrystalline cellulose (MCC). Proc. 9th Nordic Feed Science Conference, Uppsala, Sweden; 12-13 June 2018; pages 87-93. Available at: https://www.slu.se/globalassets/ew/org/inst/huv/konferenser/nfsc/nfsc-2018_proceedings_corr_e-version.pdf

## Claims

1. A method of ensiling *Asparagopsis* sp., the method comprising the steps of:

   (a) providing *Asparagopsis sp.* having a moisture content of between 60 and 94 wt%;
   (b) adding an ensiling agent comprising an organic acid having 1 to 7 carbon atoms or a salt of an organic acid having 1 to 7 carbon atoms;
   (c) mixing said *Asparagopsis sp.* with the ensiling agent thereby providing a mixture; and
   (d) storing the mixture from step (c) under dark and anaerobic conditions for a time period sufficient to reduce the pH of the mixture to 4 or less.

2. The method according to claim 1, wherein the organic acid is selected from formic acid, acetic acid, propionic acid, butyric acid and lactic acid, preferably wherein the organic acid is formic acid and/or propionic acid.

3. The method according to claim 1 or 2, wherein the ensiling agent comprises formic acid and propionic acid, wherein the weight ratio between formic acid and propionic acid is between 2:1 to 4:1, preferably 3:1.

4. The method according to any one of the preceding claims, wherein the ensiling agent further comprises potassium sorbate and/or sodium formate.

5. The method according to any one of the preceding claims, wherein the ensiling agent comprises formic acid, propionic acid, potassium sorbate and sodium formate, preferably wherein the ensiling agent comprises 58 wt% formic acid, 20 wt% propionic acid, 2.5 wt% potassium sorbate and 5 wt% sodium formate.

6. The method according to any one of the preceding claims, wherein the amount of ensiling agent added in step (b) is 5 to 20 mL per kg of *Asparagopsis* sp., preferably 10 to 15 mL, most preferred 12 mL per kg of *Asparagopsis* sp..

7. The method according to any one of the preceding claims, wherein *Asparagopsis* sp. provided in step (a) has a moisture content of 65 to 90 wt%, preferably 70 to 85 wt%, more preferred 75 to 80 wt%.

8. The method according to any one of the preceding claims, wherein *Asparagopsis* sp. is in its tetrasporophyte life stage or in its gametophyte life stage, preferably in its tetrasporophyte life stage.

9. The method according to any one of the preceding claims, wherein *Asparagopsis* sp. is *Asparagopsis armata* or *Asparagopsis taxiformis*, preferably *Asparagopsis armata*.

10. The method according to any one of the preceding claims, wherein steps (b) and (c) are performed within an hour from harvest or from removal of excess water.

11. Ensiled *Asparagopsis* sp. comprising bromoform in an amount of between 0.3 to 7 wt%, based on dry weight, preferably between 1 to 6 wt%, more preferred 2 to 5 wt%.

12. Ensiled *Asparagopsis* sp. according to claim 11, further comprising:

    fat in an amount of 0.3 to 0.7 wt%, and/or
    carbohydrates in an amount of 8 to 12 wt%, and/or
    fibres in an amount of 17 to 23 wt%,

based on dry weight.

13. Ensiled *Asparagopsis* sp., wherein the ensiled *Asparagopsis* sp. is produced by the method according to any one of claims 1 to 10.

14. An anti-methanogenic feed supplement comprising ensiled *Asparagopsis* sp. according to any one of claims 11 to 13 or produced by the method according to any one of claims 1 to 10.

15. A method of reducing methanogenesis in a ruminant, the method comprising feeding the ruminant ensiled *Asparagopsis* sp. in an amount corresponding to 0.2 to 0.6 wt%, based on dry matter, of the total feed intake per day, wherein the ensiled *Asparagopsis* sp. is ensiled *Asparagopsis* sp. according to any one of claims 11 to 13 or produced by the method according to any one of claims 1 to 10.

16. Use of ensiled *Asparagopsis* sp. according to any one of claims 11 to 13 or produced by the method according to any one of claims 1 to 10 for reducing methanogenesis in a ruminant.

Europäisches
Patentamt

European
Patent Office

Office européen
des brevets

# EUROPEAN SEARCH REPORT

**Application Number**

EP 24 15 5779

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ROQUE BREANNA M ET AL: "Inclusion of Asparagopsis armata in lactating dairy cows' diet reduces enteric methane emission by over 50 percent", JOURNAL OF CLEANER PRODUCTION, ELSEVIER, AMSTERDAM, NL, vol. 234, 20 June 2019 (2019-06-20), pages 132-138, XP085747443, ISSN: 0959-6526, DOI: 10.1016/J.JCLEPRO.2019.06.193 [retrieved on 2019-06-20] * abstract * * paragraphs [02.1], [03.1], [03.2] * | 1-16 | INV. A23K30/15 A23K10/30 |
| A | WO 2022/243984 A1 (THE CAWTHRON INST TRUST BOARD [NZ]) 24 November 2022 (2022-11-24) * page 4, line 6 - page 5, line 10 * * page 13, line 24 * | 1-16 | |
| A | US 2016/339067 A1 (MACHADO LORENNA [BR] ET AL) 24 November 2016 (2016-11-24) * paragraphs [0001], [0006] - [0009], [0019] - [0023], [0044], [0207], [0208] * * claims 19-20 * | 1-16 | TECHNICAL FIELDS SEARCHED (IPC) A23K |
| A | MAGNUSSON MARIE ET AL: "Using oil immersion to deliver a naturally-derived, stable bromoform product from the red seaweed Asparagopsis taxiformis", ALGAL RESEARCH, vol. 51, 1 October 2020 (2020-10-01), page 102065, XP093009728, NL ISSN: 2211-9264, DOI: 10.1016/j.algal.2020.102065 * abstract * * paragraphs [02.1], [02.2], [03.1] * | 1-16 | |

-/--

The present search report has been drawn up for all claims

| Place of search | Date of completion of the search | Examiner |
|---|---|---|
| Munich | 27 June 2024 | Couzy, François |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 24 15 5779

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2014/178944 A1 (PAREKH SARAD [US] ET AL) 26 June 2014 (2014-06-26)<br>* paragraphs [0039] - [0048] *<br>* claims 1,4-11,14-15,30 *<br>----- | 1-16 | |
| A | THORSTEINSSON M ET AL: "Effects of dietary inclusion of 3 Nordic brown macroalgae on enteric methane emission and productivity of dairy cows",<br>JOURNAL OF DAIRY SCIENCE, AMERICAN DAIRY SCIENCE ASSOCIATION, US,<br>vol. 106, no. 10,<br>23 August 2023 (2023-08-23), pages 6921-6937, XP087404797,<br>ISSN: 0022-0302, DOI:<br>10.3168/JDS.2023-23437<br>[retrieved on 2023-08-23]<br>* abstract *<br>* page 6921 - page 6922 *<br>* page 6930 - page 6934 *<br>----- | 1-16 | |
| A | EP 4 000 411 A1 (TEREOS FRANCE [FR]) 25 May 2022 (2022-05-25)<br>* claims 1-4,6,9,10 *<br>----- | 1-16 | **TECHNICAL FIELDS SEARCHED (IPC)** |

The present search report has been drawn up for all claims

| Place of search | Date of completion of the search | Examiner |
|---|---|---|
| Munich | 27 June 2024 | Couzy, François |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 24 15 5779

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2024

| Patent document cited in search report | | Publication date | Patent family member(s) | | Publication date |
|---|---|---|---|---|---|
| WO 2022243984 | A1 | 24-11-2022 | AU | 2022278042 A1 | 07-12-2023 |
| | | | EP | 4322977 A1 | 21-02-2024 |
| | | | GB | 2621748 A | 21-02-2024 |
| | | | WO | 2022243984 A1 | 24-11-2022 |
| US 2016339067 | A1 | 24-11-2016 | AU | 2015208661 A1 | 11-08-2016 |
| | | | BR | 112016016962 A2 | 24-07-2018 |
| | | | CA | 2937580 A1 | 30-07-2015 |
| | | | CN | 106232128 A | 14-12-2016 |
| | | | CN | 111686135 A | 22-09-2020 |
| | | | DK | 3102219 T3 | 18-01-2021 |
| | | | EP | 3102219 A2 | 14-12-2016 |
| | | | ES | 2838803 T3 | 02-07-2021 |
| | | | HU | E053269 T2 | 28-06-2021 |
| | | | MX | 369067 B | 28-10-2019 |
| | | | NZ | 722423 A | 29-10-2021 |
| | | | PL | 3102219 T3 | 05-07-2021 |
| | | | PT | 3102219 T | 30-11-2020 |
| | | | US | 2016339067 A1 | 24-11-2016 |
| | | | WO | 2015109362 A2 | 30-07-2015 |
| US 2014178944 | A1 | 26-06-2014 | NONE | | |
| EP 4000411 | A1 | 25-05-2022 | EP | 4000411 A1 | 25-05-2022 |
| | | | EP | 4282276 A2 | 29-11-2023 |
| | | | FR | 3116181 A1 | 20-05-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Journal of AOAC International*, 2005, vol. 88 (1)
- *Journal of AOAC International*, 2003, vol. 86 (6)

- **STEFAŃSKI, T. et al.** vitro ruminal digestion and methane production from different products of microcrystalline cellulose (MCC).. *Proc. 9th Nordic Feed Science Conference*, 2018, 87-93, https://www.slu.se/globalassets/ew/org/inst/huv/konferenser/nfsc/nfsc-2018_proceedings_corr_e-version.pdf